# DEMANDE DE BREVET EUROPEEN

(11) **EP 1 820 430 A1**
(43) Date de publication de la demande: **22.08.2007**
(21) Numéro de dépôt: 06447021.4
(22) Date de dépôt: 16.02.2006
(51) Int. Cl.: A47J 37/04, A23B 4/00

(54) **Dispositif pour le support et le stockage d'un produit alimentaire**

(71) Demandeur: Sakar, Imam Ali, 7900 Leuze-en-Hainaut (BE)
(72) Inventeur: Sakar, Imam Ali, 7900 Leuze-en-Hainaut (BE)

(57) **Abrégé**

L'invention concerne un dispositif pour le support et le stockage d'un produit alimentaire rôti ou à rôtir du genre « kebab » enfilé sur une broche (15) ou sur des brochettes.

L'invention est caractérisée en ce que le dispositif comprend :
• un bâti comprenant un socle (2) à partir duquel s'étendent deux parois latérales verticales (3 ;3') et parallèles d'extrémité,
• un chariot mobile (4) situé entre les parois latérales du bâti comprenant une paroi inférieure (5) et une paroi supérieure (6) entre lesquelles s'étendent des moyens de liaison de celles-ci, les parois supérieure du chariot et latérales du bâti comportant des moyens aptes à coopérer entre eux pour assurer un déplacement du chariot entre ces parois latérales.

## Description

La présente invention se rapporte d'une manière générale, à un dispositif pour le support et le stockage d'un produit alimentaire.

Plus précisément, l'invention concerne un dispositif pour le support et le stockage d'un produit alimentaire rôti ou à rôtir du genre kebab enfilé sur une broche ou sur des brochettes.

A l'heure actuelle, on assiste à une expansion de petites rôtisseries proposant des sandwiches garnis d'une viande grillée appelés kebabs.

Ces kebabs, d'origine grecque et turque, sont composés de morceaux de poulet ou de viande grillée coupés en lamelles provenant de tranches de viande crue embrochées horizontalement de façon à former un cône ou un cylindre de viande. Ces cônes ou cylindres sont alors cuits en tournant lentement devant un grill. Toutefois, lorsque la totalité de ce cône ou cylindre n'a pas été consommé, une conservation, dans de bonnes conditions s'impose pour une utilisation ultérieure.

Par mesure d'hygiène et de santé publique, cette viande ne peut être recongelée pour sa conservation. La réglementation en vigueur prohibe, d'ailleurs, la conservation à basse température d'une viande qui a été portée, au préalable à très haute température.

Pour cette raison, cette conservation se pratique habituellement en entreposant la viande en question dans un réfrigérateur dont la température de départ, aux environs de 15°C, est lentement abaissée aux environs de 3°C par exemple en 1 heure environ. Comme cette viande rôtie continue à émettre des graisses de cuisson durant son refroidissement, le stockage au réfrigérateur pose problème nécessitant un emballage particulier tenant compte de ce suintement de graisse.

La présente invention a pour but de proposer un dispositif pour le support et le stockage d'un produit alimentaire rôti ou même à rôtir disposé sur une broche en particulier une viande du genre kebab, dispositif capable de pallier les inconvénients de l'état de la technique en ce qu'il permet, à moindre frais, le stockage aisé de cette viande dans un réfrigérateur tout en offrant la possibilité de l'en extraire sans difficulté.

Pour atteindre ce but, le dispositif du type indiqué précédemment est caractérisé en ce qu'il comprend :
- un bâti comprenant un socle à partir duquel s'étendent deux parois latérales verticales et parallèles d'extrémité,
- un chariot mobile situé entre les parois latérales du bâti comprenant une paroi inférieure et une paroi supérieure entre lesquelles s'étendent des moyens de liaison de celles-ci, les parois supérieure du chariot et latérales du bâti comportant des moyens aptes à coopérer entre eux pour assurer un déplacement du chariot entre ces parois latérales.

Les différents éléments constitutifs du bâti sont habituellement réalisés en un ou plusieurs matériaux capables de subir de fréquentes variations de température. Il pourra s'agir notamment d'un matériau métallique en particulier l'acier inoxydable, ou une matière synthétique par exemple une matière synthétique polymérique.

Avantageusement, les deux parois latérales de ce bâti sont réunies par un ou plusieurs moyens rigides de consolidation formés par exemple d'une ou de plusieurs parois ajourées ou non. Il peut s'agir par exemple d'une paroi de fond solidarisant les parois latérales par leurs bords verticaux et/ou d'une paroi de sommet, parallèle au socle et solidarisant les parois latérales par leurs bords supérieurs transversaux. En dehors notamment des endroits prévus pour la disposition des moyens de déplacement du chariot, les parois latérales peuvent comporter un ou plusieurs évidements permettant d'alléger le dispositif selon l'invention sans en affecter la solidité.

Les moyens de liaison entre les parois inférieure et supérieure du chariot comprennent avantageusement au moins trois tiges de raccord non alignées ou encore d'au moins deux parois partiellement évidées ou non.

Selon une autre caractéristique de l'invention, les moyens aptes à coopérer entre eux pour assurer un déplacement du chariot comprennent au moins un axe muni de roues situées à ses extrémités, ces roues coopérant avec des rails ou des rainures situées au niveau des parois latérales du bâti.

Ainsi, les moyens permettant d'assurer un déplacement du chariot comprennent, pour l'essentiel, au moins un axe, de préférence deux axes, muni de roues situées à ses extrémités. Cet axe peut être mis en rotation sur lui-même auquel cas il est préférentiellement monté sur roulements à billes.

Alternativement, l'axe en question peut être maintenu fixe par rapport à la paroi supérieure alors que les roues d'extrémité sont montées mobiles, de préférence sur roulements à billes.

D'autre part, cet axe peut être inséré dans l'épaisseur de la paroi supérieure du chariot ou, au contraire, solidarisé à la face inférieure de cette paroi par l'intermédiaire de moyens quelconques de liaison.

Les roues d'extrémité d'axe peuvent être avantageusement du genre roue à jante concave ou roue à gorge, à jante plate ou à jante bombée. Ces roues coopèrent généralement avec des profilés formant rails, essentiellement des équerres en forme de L, rapportés sur la face interne des parois latérales du bâti. La face débordante de ces équerres, c'est-à-dire la face non fixée à la paroi latérale en question, dans ce cas la face de roulement, est parallèle au socle. Toutefois, le bord de cette face de roulement peut présenter un rebord ou cette face de roulement elle-même peut être pourvue d'une saillie longitudinale, parallèle à la paroi latérale du bâti, rebord et saillie s'éloignant du socle.

Avantageusement, cette face de roulement épouse un profil complémentaire à celui de la roue en contact avec elle.

Au surplus, le profilé formant rail peut prendre la forme d'un U dont les deux ailes parallèles sont elles-mêmes parallèles au socle, la face de roulement, et éventuellement la face opposée à celle-ci, présentant un profil complémentaire à celui de la roue.

Selon une autre mise en oeuvre, les roues d'extrémités coopèrent avec des rainures en U ménagées parallèlement au socle dans l'épaisseur de la paroi latérale du bâti via sa face interne, ces rainures formant rails pour les roues en question.

D'une manière avantageuse, le bord de la face de roulement des profilés en U et des rainures en U peut être muni d'un rebord ou encore cette face de roulement elle-même peut être pourvue d'une saillie longitudinale, parallèle à la paroi latérale du bâti, rebord ou saillie s'éloignant du socle.

Si nécessaire, le bord de la face opposée à cette face de roulement présente également un rebord ou encore cette face opposée elle-même est pourvue d'une saillie longitudinale, parallèle à la paroi latérale du bâti, rebord ou saillie se rapprochant du socle.

Par ailleurs, ces rebords et saillies longitudinales des profilés en L ou en U ou des rainures sont configurés de manière à empêcher le retrait de la roue hors de ce profilé ou de cette rainure.

D'autre part, les rails fixés aux parois latérales du bâti peuvent être configurés sous forme télescopique de façon à en faire varier la longueur. Dans ce cas, ces rails seront constitués de plusieurs éléments de rail distincts capables de s'emboîter et de coulisser les uns dans les autres en donnant lieu à une surface de roulement unique de longueur variable. Au surplus, la longueur totale de ces rails télescopiques après déploiement sera suffisante pour permettre une sortie complète ou quasi complète du chariot maintenu sur ces rails.

En outre, les rainures et/ou profilés en L ou en U situés au niveau de deux parois latérales verticales en regard l'une de l'autre sont parallèles.

De manière à limiter la course du chariot lors de son déplacement des moyens d'arrêt sont prévus au niveau des rails en question lesquels peuvent correspondre avantageusement à des butoirs éventuellement amovibles de manière à faire varier, si nécessaire l'amplitude du déplacement du chariot.

Selon une autre caractéristique de l'invention, les parois latérales du bâti comportent des moyens aptes à assurer la retenue du dispositif contre les parois latérales d'une chambre de réfrigération en particulier d'un réfrigérateur.

Ces moyens, avantageusement amovibles, sont capables de maintenir le dispositif selon l'invention à l'intérieur de la chambre de réfrigération en particulier d'un réfrigérateur vertical quelles que soient les dimensions en largeur de cette chambre et quelles que soient les forces de traction ou de poussée exercées sur le chariot pour en assurer le déplacement.

A titre d'exemple, ces moyens de retenue peuvent comprendre une tige filetée coopérant avec un taraudage pratiqué dans l'épaisseur d'une paroi latérale du bâti, en sorte que, par vissage, cette tige soit amenée en butée contre une paroi latérale interne de cette chambre de réfrigération.

Selon une caractéristique supplémentaire, le chariot du dispositif selon l'invention comprend des moyens de retenue d'une broche support d'un bloc de viande en particulier genre kebab ou encore de brochettes supports de morceaux de viande.

Avantageusement, ces moyens de retenue se situent au niveau des parois inférieure et supérieure du chariot de façon à assurer la retenue des extrémités respectivement inférieure et supérieure de la broche ou des brochettes.

En particulier, de tels moyens de retenue peuvent comprendre un orifice pratiqué dans la paroi inférieure du chariot, orifice capable de recevoir l'extrémité inférieure de la broche ou de la brochette et une rainure ménagée dans la paroi supérieure apte à loger l'extrémité supérieure de cette broche ou brochette. De préférence, cette rainure sera munie de moyens capables d'en assurer l'ouverture ou la fermeture.

La broche de viande rôtie, lorsqu'elle est introduite dans une chambre de réfrigération par l'intermédiaire du dispositif selon l'invention, se trouve encore à une température suffisamment élevée (environ 15°C) pour que des graisses de cuisson continuent à suinter de cette viande.

En conséquence, selon une caractéristique supplémentaire et avantageuse de l'invention, le dispositif est muni d'un plateau récupérateur de graisse de cuisson de viande, plateau situé, de préférence, au niveau du socle du bâti.

L'invention sera mieux comprise et d'autres buts, caractéristiques et avantages de celle-ci apparaîtront plus clairement au cours de la description explicative qui va suivre faite en référence aux dessins schématiques donnés uniquement à titre d'exemples illustrant des modes de réalisation de l'invention et dans lesquels :
- la figure 1 est une vue d'une coupe verticale A-A du dispositif selon l'invention,
- la figure 2 est une vue d'une coupe verticale latérale B-B du dispositif à la figure 1,
- la figure 3 est une vue d'une coupe horizontale C-C du dispositif à la figure 1,
- la figure 4 est une vue en élévation d'un système de retenue du dispositif de l'invention contre une paroi d'un réfrigérateur,
- la figure 5 est une vue d'une coupe verticale d'un rail logeant une roue et son axe.

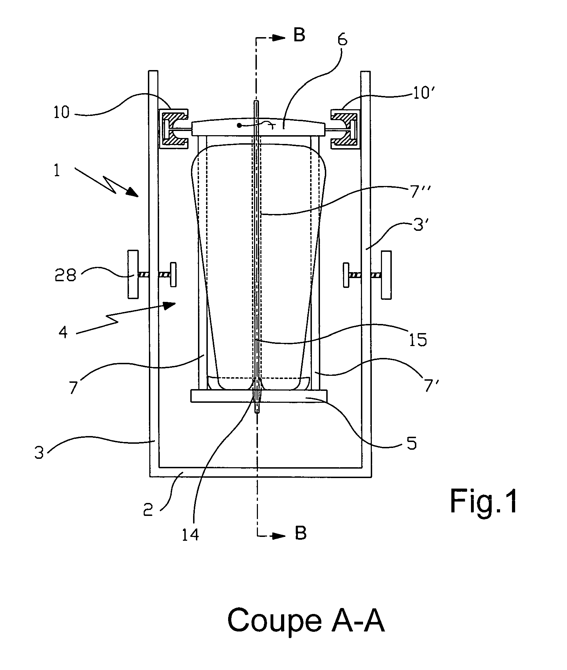

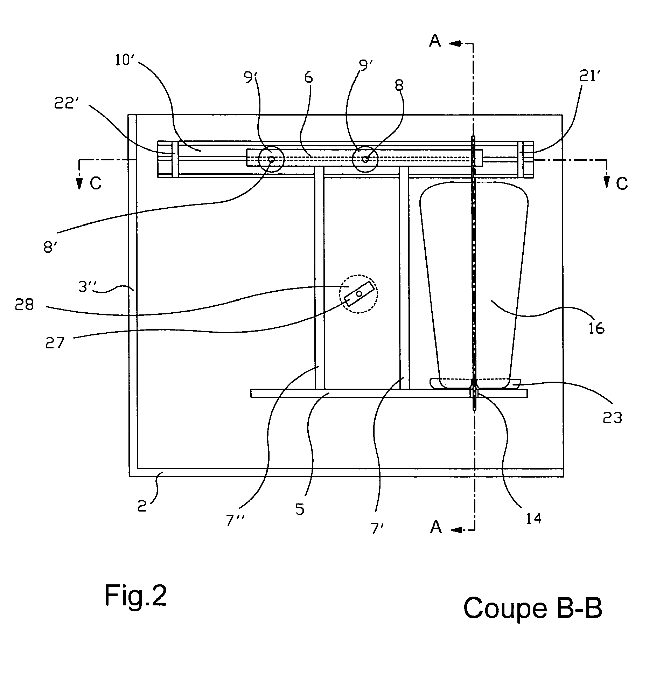

Tel que représenté aux figures 1 à 3, le dispositif selon l'invention comprend un bâti 1 formé du socle 2 et des parois 3, 3' verticales et parallèles. Ces parois, habituellement en acier inoxydable, sont situées en bout de socle 2.

Selon le mode de réalisation aux figures 1 à 3, le bâti 1 comprend, en outre, une paroi 3" de fond ou de renfort, celle-ci pouvant être omise dans d'autres modes de réalisation.

On remarque également un chariot 4 comprenant la paroi inférieure 5 et la paroi supérieure 6, l'une et l'autre solidarisées au moyen des tiges 7, 7' et 7" formant liaison.

Par ailleurs, la paroi supérieure 6 est munie de deux axes parallèles 8 et 8' susceptibles de rotation sur eux-mêmes à l'intérieur de cette paroi. Ces axes sont avantageusement montés sur roulements à billes (non représentés) et comprennent chacun deux roues 9 et 9' d'extrémité.

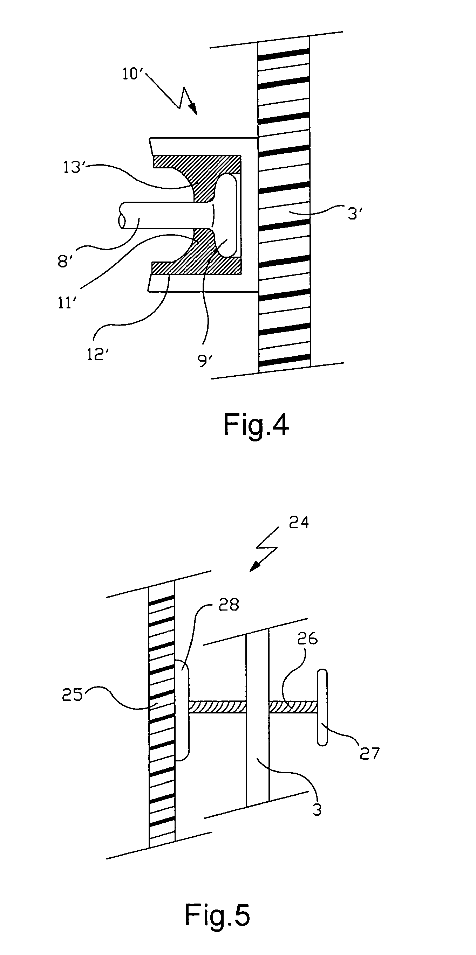

Ces roues coopèrent avec des rails 10 et 10', en forme de U, parallèles et équidistants du socle 2, ces rails étant montés sur la face interne des parois latérales 3 et 3'. On observe d'autre part à la figure 4 que ces rails, dans l'exemple ci-dessus le rail 10' fixé à la paroi 3', sont pourvus d'une saillie longitudinale 11' située au niveau de la face de roulement 12' et d'une saillie longitudinale 13' au niveau de la face opposée.

Ces saillies ont pour avantage, lors d'un déplacement du chariot 4, de guider l'axe 8' porteur de la roue 9' et d'en interdire le retrait hors du profilé 10'.

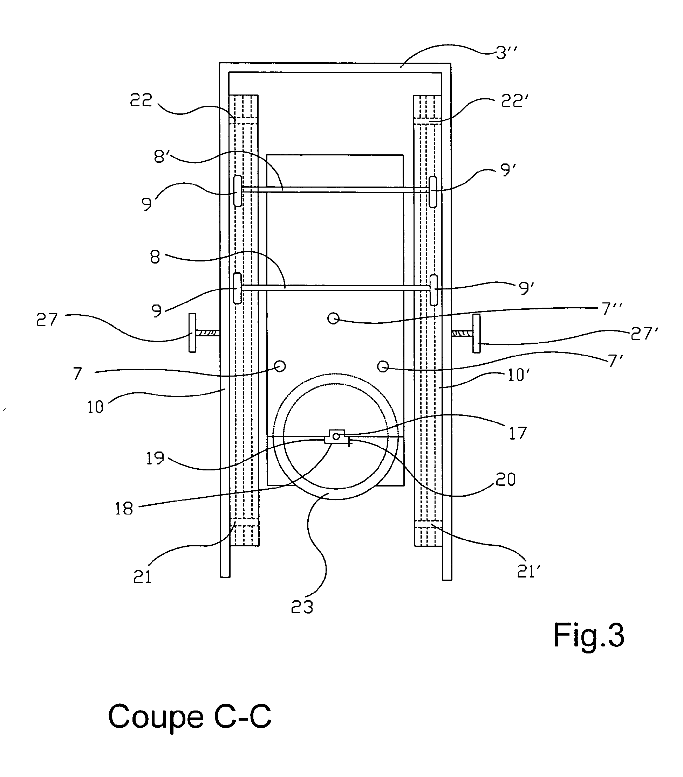

Au surplus, on observe que la paroi inférieure 5 est pourvue d'un orifice 14 de retenue de l'extrémité inférieure d'une broche 15 capable de supporter un bloc de viande kebab 16 tandis que la paroi supérieure 6 laisse apparaître une rainure 17 de logement de l'extrémité supérieure de cette même broche. Un système généralement quelconque de fermeture de ce logement est fixé à cette paroi supérieure. Tel que représenté à la figure 3, un tel système peut être formé d'un bras 18 pivotant autour d'un axe 19 solidarisé à la paroi supérieure en question, ce bras étant capable de coopérer avec un oeillet 20 de retenue lorsque ce système est en position de fermeture.

Par ailleurs, les moyens de réglage en translation permettant d'avancer ou de reculer le chariot sont formés d'une part de deux butées avant 21, 21' fixées respectivement au niveau des rails 10 et 10', limitant la course avant du chariot et d'autre part de deux butées arrières 22 et 22' analogues fixées aux mêmes rails 10 et 10' limitant la course arrière du chariot.

De manière à recueillir les graisses de cuisson de viande, la paroi inférieure supporte un plateau 23 formé d'une section transversale d'un tore centré sur l'orifice 14, le diamètre de l'orifice central de cette section torique équivalant sensiblement au diamètre de la broche 15.

Dans d'autres modes de réalisation, les butées arrières peuvent être omises, la limitation arrière de la course du chariot étant assurée par la paroi 3" de renfort.

D'autre part, on observe à la figure 5 un système 24 de retenue du chariot contre une paroi 25 d'un réfrigérateur, chariot dont on observe la paroi 3 à retenir. Cette paroi 3 est traversée de part en part par une tige filetée 26 coopérant avec un taraudage à l'intérieur de cette même paroi tandis que l'une des extrémités de cette tige filetée est occupée par une tigette 27 ou une rondelle de préhension, l'autre extrémité par une coupelle d'appui 28 généralement en matière souple.

A la lecture de ce qui précède, on comprend que la mise en oeuvre du dispositif de l'invention nécessite d'abord l'insertion de celui-ci dans la chambre d'un réfrigérateur puis la mise en place d'une retenue de ce dispositif contre les parois latérales de ce réfrigérateur.

A cet effet, la tige filetée 26 est vissée dans la paroi 3 du dispositif de l'invention de sorte que la coupelle d'appui 28 est poussée contre la paroi 25 du réfrigérateur exerçant une certaine pression contre cette paroi.

Le vissage est interrompu lorsque la pression exercée par la coupelle est suffisante pour vaincre les forces de frottement de celle-ci sur la paroi du réfrigérateur et ainsi assurer la retenue du dispositif de l'invention à l'intérieur de celui-ci. Cette opération s'avère indispensable pour éviter que les futurs va-et-vient du chariot ne désolidarisent le dispositif du réfrigérateur.

Par la suite, le réfrigérateur étant ouvert, le chariot est amené vers l'avant, c'est-à-dire en direction de la porte de ce réfrigérateur jusqu'à arriver en butée contre les arrêtoirs avants 21 et 21'. On ouvre le logement 17 en libérant, par pivotement, le bras 18 de l'oeillet 20 et on arrime, au dispositif de l'invention, une broche munie d'un cône ou cylindre de viande kébab à refroidir, cette viande se trouvant généralement à une température d'environ 15°C. A cette fin, on introduit l'extrémité inférieure de cette broche dans l'orifice 14 et sa partie supérieure dans la rainure 17 puis on assure la fermeture de ce logement 17 au moyen du bras 18 et de l'oeillet 20 du système de fermeture. Le chariot peut alors être repoussé à l'intérieur du réfrigérateur jusqu'à arriver en butée contre les arrêtoirs arrières 22 et 22', ce qui permet de refermer celui-ci. On peut alors assurer un refroidissement supplémentaire de la viande jusqu'à, généralement 3 à 4°C, ce qui nécessite ordinairement environ 1 heure, et un maintien de celle-ci à cette température pour assurer sa conservation.

Le dispositif selon l'invention présente des avantages incontestables. Outre sa simplicité de conception et de réalisation ainsi que son adaptabilité remarquable à des réfrigérateurs verticaux de diverses dimensions, le dispositif selon l'invention constitue un support d'une broche ou de brochettes de viande kebab de grande souplesse d'utilisation. En effet, ce dispositif permet le maintien aisé de ce bloc dans une position idéale pour une conservation dans le réfrigérateur sans aucun contact avec un quelconque élément physique extérieur. De cette façon le bloc de viande en question peut être refroidi selon la courbe de température désirée et maintenu à température optimale de conservation dans d'excellentes conditions d'hygiène.

## Revendications

1. Dispositif pour le support et le stockage d'un produit alimentaire rôti ou à rôtir du genre « kebab » enfilé sur une broche (15) ou sur des brochettes, **caractérisé en ce qu'**il comprend :
• un bâti comprenant un socle (2) à partir duquel s'étendent deux parois latérales verticales (3 ; 3') et parallèles d'extrémité,
• un chariot mobile (4) situé entre les parois latérales du bâti comprenant une paroi inférieure (5) et une paroi supérieure (6) entre lesquelles s'étendent des moyens de liaison de celles-ci, les parois supérieure du chariot et latérales du bâti comportant des moyens aptes à coopérer entre eux pour assurer un déplacement du chariot entre ces parois latérales.

2. Dispositif selon la revendication 1, **caractérisé en ce que** les deux parois latérales du bâti sont réunies par un ou plusieurs moyens rigides de consolidation.

3. Dispositif selon la revendication 2, **caractérisé en ce que** les moyens rigides de consolidation comprennent une ou plusieurs parois (3") ajourées ou non.

4. Dispositif selon l'une des revendications 1 à 3, **caractérisé en ce que** les moyens de liaison entre les parois inférieure et supérieure du chariot comprennent au moins trois tiges de raccord (7 ;7' ; 7") non alignées ou au moins deux parois partiellement évidées ou non.

5. Dispositif selon l'une des revendications 1 à 4, **caractérisé en ce que** les moyens aptes à coopérer entre eux pour assurer un déplacement du chariot comprennent au moins un axe (8 ;8') muni de roues (9 ;9') situées à ses extrémités, ces roues coopérant avec des rails (10 ; 10') ou des rainures situés au niveau des parois latérales du bâti.

6. Dispositif selon l'une des revendications 1 à 5, **caractérisé en ce que** les parois latérales du bâti comportent des moyens aptes à assurer leur retenue contre les parois latérales d'une chambre de réfrigération.

7. Dispositif selon la revendication 6, **caractérisé en ce que** les moyens aptes à assurer la retenue d'une paroi latérale du bâti comprend une tige filetée (26) coopérant avec un taraudage pratiqué dans l'épaisseur de cette paroi latérale.

8. Dispositif selon l'une des revendications 1 à 7, **caractérisé en ce que** le chariot comprend des moyens de retenue d'une broche (15) support d'un bloc de viande (16) ou de brochettes supports de morceaux de viande.

9. Dispositif selon la revendication 8, **caractérisé en ce que** les moyens de retenue comprennent un orifice (14) pratiqué dans la paroi inférieure et une rainure (17) ménagée dans la paroi supérieure munie de moyens aptes à assurer sa fermeture ou son ouverture.

10. Dispositif selon l'une des revendications 1 à 9, **caractérisé en ce que** le socle est muni d'un plateau (23) récupérateur de graisse de cuisson de viande.
